# EUROPÄISCHE PATENTSCHRIFT

(11) **EP 2 744 117 B1**
(45) Veröffentlichungstag und Bekanntmachung des Hinweises auf die Patenterteilung: **17.08.2016**
(21) Anmeldenummer: 12196869.7
(22) Anmeldetag: 13.12.2012
(51) Int. Cl.: H04B 3/54, H04L 5/02, H04L 5/14, H04L 25/03, H04L 27/26, H04L 27/38, H04W 52/34, H04L 1/00, H04L 27/00, H02J 3/00, H04L 12/28, H04L 5/00, H04L 25/02, H04L 27/34, H04J 11/00, H04W 52/08, H04W 52/10, H04W 52/14, H04W 52/24, H04W 52/42

(54) **Verfahren zur Verringerung von Störeinflüssen in einem Kommunikationsnetzwerk**
Method for reducing interference in a communication network
Procédé de réduction d'influences parasites dans un réseau de communication

(43) Veröffentlichungstag der Anmeldung: 18.06.2014
(73) Patentinhaber: Deutsche Telekom AG, 53113 Bonn (DE)
(72) Erfinder: Tudziers, Christoph, 64673 Zwingenberg (DE)
(74) Vertreter: Patentship Patentanwaltsgesellschaft mbH

(56) Entgegenhaltungen:
- EP-A1- 1 394 960
- EP-A1- 1 643 658
- EP-A1- 2 154 789
- WO-A1-2011/154087
- WO-A2-2011/006585
- US-A- 5 289 476

## Beschreibung

Die vorliegende Erfindung betrifft ein Verfahren zur Verringerung von Störeinflüssen in einem Kommunikationsnetzwerk sowie Netzwerkentitäten und Verfahren zur Kommunikation über ein Kommunikationsnetzwerk.

Die Offenlegungsschrift EP 1 394 960 A1 zeigt ein Verfahren für eine automatische Signalverstärkungssteuerung in einem Netzwerk.

Die Offenlegungsschrift EP 2 154 789 A1 zeigt ein Verfahren zum Detektieren eines Auftretens eines Kurzwellenradiosignals in einem PLC-System.

Moderne Kommunikationssysteme sind auf die Nutzung breiter Frequenzbereiche angewiesen, um die für viele zeitgemäße Services (HDTV-Übertragung, Internetverkehr usw.) erforderlichen hohen Datenraten zu übertragen. Dies gilt sowohl für leitungsgebundene als auch drahtlose Kommunikationsysteme (PLC, DSL, DVB-T, LTE usw.), was vermehrt zur überlappenden Frequenznutzung durch verschiedene Kommunikationssysteme und traditionelle Funkdienste führt. Dadurch steigt das Risiko gegenseitiger Störungen am Einsatzort, die durch ungewollte elektromagnetische Kopplungen und Einstrahlungen verursacht werden.

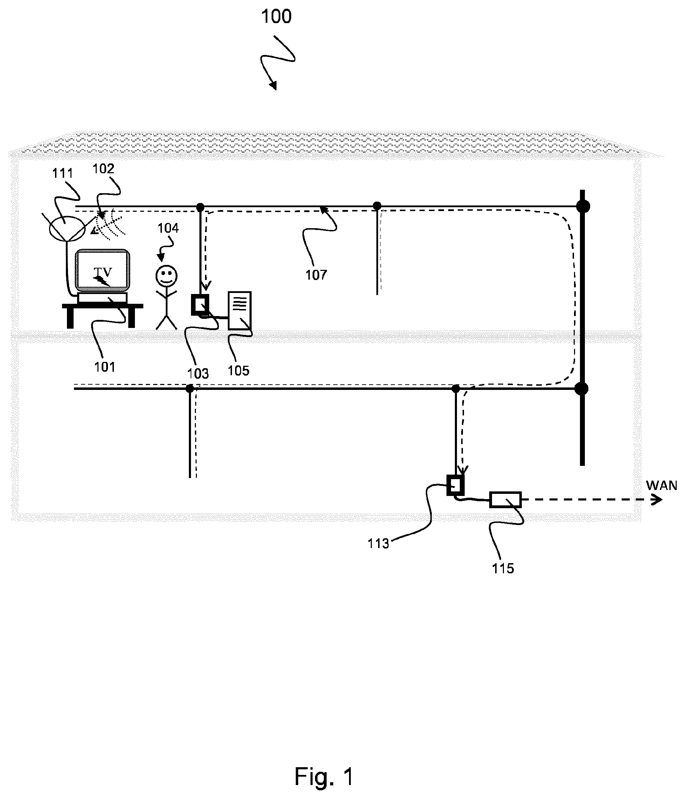

Am konkreten Beispiel eines PLC (Powerline Communication) Netzwerks 100, wie in Fig. 1 gezeigt, das auf der vorhanden Leitungsinfrastruktur für die Stromversorgung, d.h., den "Stromleitungen" 107, arbeiten kann, soll dies verdeutlicht werden. Diese Netzwerke sind in Privatgebäuden für die Heimvernetzung und den Internetzugang, beispielsweise mittels Router 115, mittlerweile sehr gebräuchlich, weil sie für Kunden eine bequeme Alternative zur Installation einer neuen LAN-Kabelinfrastruktur innerhalb der Wohnung oder des Hauses darstellen. Davon profitieren Telekommunikationsnetzbetreiber indirekt, da mehr Kunden in die Lage versetzt werden, neue Services wie IPTV, Heimautomatisierung usw. zu nutzen.

Allerdings wurden Stromleitungen 107 nicht für die Übertragung von hochfrequenten Signalen, wie sie von den PLC Schnittstellen 103, 113 ins Stromnetz eingekoppelt werden, ausgelegt, die mit einem Einsatz der oben genannten Verfahren verbunden ist. Daraus können durch die Störemission 102 vom Leitungsnetz 107 insbesondere Beeinträchtigungen des Funkempfangs 111 resultieren, die wiederum behördlich veranlasste Stilllegungen der Übertragungssysteme oder im Extremfall Verkaufsverbote zur Folge haben können, was ein erhebliches Risiko für den Betreiber darstellt. Darüber hinaus hat das beschriebene Funkstörpotenzial in der PLC-Standardisierung zu jahrelang andauernden Kontroversen und einem Stillstand geführt, der einen noch größeren Markterfolg dieser Technologie verhindert.

Das heute übliche manuelle Verfahren am Beispiel einer Störung des DVB-T-Empfangs sieht dabei wie folgt aus: Nach einer Störungsmeldung des Funknutzers, beispielsweise dem Besitzer des DVB-T-Empfängers 101, wird vor Ort im gestörten Frequenzbereich (bspw. einem DVB-T-Band) durch einen Messdienst 104 das vorhandene (überhöhte) Funkstörgeräusch 102 ermittelt. Anschließend werden zur Identifizierung des Störers 103 sukkessive "verdächtige" Systeme/Geräte außer Betrieb genommen und die Auswirkung auf das Störgeräusch 102 beobachtet. Wenn die Überhöhung des Störgeräuschs 102 durch das Abschalten eines bestimmten Geräts, beispielsweise des am Computer 105 angeschlossenen PLC-Adapters (103) verschwindet, ist der Störer 103 identifiziert. Anschließend kann versucht werden, diesen Störer 103 durch Ausblenden des kritischen Frequenzbereichs oder andere Maßnahmen funkverträglich zu betreiben. Andernfalls muss das Gerät 103 komplett außer Betrieb genommen werden.

Es ist die Aufgabe der vorliegenden Erfindung, Störeinflüsse in einem Kommunikationsnetzwerk effizient zu reduzieren, insbesondere Störemissionen von einer Leitungsnetzinfrastruktur auf eine Funknetzinfrastruktur des Kommunikationsnetzwerks.

Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass eine automatische Störreduzierung effizienter ist als eine personalaufwendige manuelle Entstörung. Die Automatisierung dieses Prozesses erfolgt über eine Aussendung einer Steuerinformation von einem gestörten Netzwerksystem, d.h. der Störsenke, zu potentiellen Stören, beispielsweise über einen eigenen Kommunikationskanal. Der Störungsfall, also ein zu hohes Hintergrundgeräusch im genutzten Frequenzbereich, wird von der Störsenke automatisch erkannt. Als Indikator hierfür kann etwa ein zu geringer Signal-Geräusch-Abstand (SNR) oder eine hohe Bitfehlerrate (BER) auf der Nutzfrequenz dienen. Die Information über die Störung sendet die Störsenke beispielsweise über einen besonderen Kommunikationskanal per Rundmeldung an potentielle Störer in der Umgebung. Die Information sollte zumindest den gestörten Frequenzbereich enthalten, kann aber auch um weitere Daten wie dem Grad der Störung usw. erweitert sein. Die potenziellen Störer empfangen die Information über die Störung und reduzieren probeweise, falls die gestörte Frequenz in deren Nutzfrequenzbereich fällt, den Sendepegel. Beispielsweise kann der Sendepegel sukkzessive reduziert werden. Führt die Sendeleistungsreduzierung durch einen der angesprochenen Störer zu einer Reduzierung des Funkstörgeräuschs, so quittiert die Störsenke dies durch eine entsprechende "Erfolgsmeldung". Falls nicht oder nicht im ausreichenden Maße, wird die Prozedur der Pegelreduzierung für das nächste potentielle Störnetzwerksystem vorgenommen. Dies wird solange fortgesetzt bis der oder die relevanten Störer gefunden sind oder im Falle eines Misserfolgs alle Netzwerkentitäten in der Umgebung die probeweise Pegelreduzierung vorgenommen haben.

Um die Erfindung im Detail zu beschreiben, werden die folgenden Abkürzungen und Bezeichnungen verwendet:
- GSM:: Global System for Mobile Communications,
- LTE:: Long Term Evolution,
- OMA:: Open Mobile Alliance,
- WAP:: Wireless Application Protocol,
- WML:: Wireless Markup Language,
- M2M:: Mobile-to-mobile oder Machine-to-machine,
- PLC:: Power Line Communications, Kommunikation über das Stromnetz,
- DSL:: Digital Subscriber Line, Digitaler Teilnehmeranschluss,
- PSD:: Power Spectral Density bzw. Leistungsdichtespektrum,
- WAN:: Wide Area Network bzw. Weitverkehrsnetz,
- DVB:: Digital Video Broadcast bzw. Digitaler Videorundfunk,
- DVB-T:: Digital Video Broadcast Terrestrial bzw. Digitaler terrestrischer Videorundfunk,
- HDTV:: High Definition Television bzw. hochauflösendes Fernsehen,
- IPTV:: Internet Protocol Television bzw. Internet Fernsehen,
- LAN:: Local Area Network bzw. lokales Netzwerk
- SNR:: Signal to Noise Ratio bzw. Signal-zu-Rauschabstand
- BER:: Bit Error Rate bzw. Bitfehlerrate,
- DMT:: Discrete Multitone Transmission bzw. diskrete Mehrfachträgerübertragung,
- OFDM:: Orthogonal Frequency Division Multiplexing bzw. Orthogonales Frequenzmultiplexverfahren,
- EMV:: Elektromagnetische Verträglichkeit,
- Netzwerkentität:: eine Einheit, Funktionseinheit oder Instanz in einem Netzwerk. Eine Netzwerkentität kann Signale von dem Netzwerk empfangen und/oder Signale in das Netzwerk senden. Eine Netzwerkentität kann beispielsweise ein Modem, eine Netzwerkkarte, ein Netzwerkabschluss oder ein Netzwerkadapter sein. Eine Netzwerkentität kann Hardware und/oder Software umfassen, um die technischen Funktionen der Netzwerkentität zu realisieren. Die Netzwerkentität kann Mikroprozessoren, Mikrochips, ASICs und/oder DSPs umfassen.

Gemäß einem Aspekt betrifft die Erfindung ein Verfahren zur Verringerung von Störeinflüssen in einem Kommunikationsnetzwerk mit einer ersten Netzwerkentität und einer zweiten Netzwerkentität, umfassend: Detektieren eines Störsignals in einem Störfrequenzbereich durch die erste Netzwerkentität; Aussenden einer Steuerinformation über den Störfrequenzbereich von der ersten Netzwerkentität zu der zweiten Netzwerkentität; und Reduzieren einer Sendeleistung der zweiten Netzwerkentität in dem Störfrequenzbereich ansprechend auf einen Empfang der Steuerinformation durch die zweite Netzwerkentität.

Der Vorteil eines solchen Verfahrens ist, dass bei einer erfolgreichen Durchführung des Entstörprozesses eine aufwändige Messung vermieden wird. Darüber hinaus wird verhindert, dass Kommunikationsnetze komplett außer Betrieb genommen werden müssen. Weiterhin werden Einschränkungen der Frequenznutzung durch Kommunikationsnetze minimiert, weil nur auf tatsächlich am Einsatzort auftretende elektromagnetische Beeinflussungen Rücksicht genommen werden muss. Deren Auftreten hängt von einer Reihe spezifischer Randbedingungen ab, wie z. B. der Ausführung der Elektro- und Dateninstallation, der Schirmwirkung der Gebäudestruktur und weiterer Faktoren. Ohne den automatischen Entstörprozess müssten bei potentiell störenden Kommunikationsnetzen vorsorgliche Frequenzaussparungen und Pegelabsenkungen auf Basis von "Worst-Case-Annahmen" erfolgen, was u. U. erzielbare Datenraten und Reichweiten stark einschränken würde.

Gemäß einer Ausführungsform des Verfahrens umfasst das Aussenden der Steuerinformation das Aussenden der Steuerinformation als eine Rundnachricht.

Der Vorteil des Aussendens der Steuerinformation als Rundnachricht liegt darin, dass auch weitere Netzwerkentitäten in der Umgebung der ersten Netzwerkentität diese Steuerinformation empfangen können und in das Verfahren zur Verringerung der Störeinflüsse mit eingebunden werden können.

Gemäß einer Ausführungsform des Verfahrens erfolgt das Reduzieren der Sendeleistung der zweiten Netzwerkentität sukzessive in bestimmten, voreingestellten Leistungsschritten.

Der Vorteil eines sukzessiven Reduzierens der Sendeleistung liegt darin, dass die zweite Netzwerkentität nicht vollständig abgeschaltet werden muss, sondern noch mit einer Sendeleistung senden kann, die die erste Netzwerkentität nicht stört. Durch das sukzessive Reduzieren kann eine optimale Sendeleistung der zweiten Netzwerkentität gefunden werden, im Sinne von möglichst großer Sendereichweite der zweiten Netzwerkentität und möglichst geringem, auf die erste Netzwerkentität einwirkenden, Störsignal.

Gemäß einer Ausführungsform des Verfahrens umfasst das Detektieren des Störsignals ein Detektieren einer auf das Störsignal ansprechenden quantitativen Größe, insbesondere einer Bitfehlerrate, in der ersten Netzwerkentität.

Das Störsignal lässt sich einfach und effizient bestimmen, wenn eine quantitative Größe ausgewertet wird, die durch das auftretende Störsignal beeinflusst wird.

Gemäß einer Ausführungsform umfasst das Verfahren ein Aussenden einer Quittungsmeldung über einen Beginn des Reduzierens der Sendeleistung von der zweiten Netzwerkentität an eine weitere Netzwerkentität ansprechend auf einen Empfang der Steuerinformation über den Störfrequenzbereich von der ersten Netzwerkentität.

Der Vorteil des Aussendens der besagten Quittungsmeldung an die weitere Netzwerkentität liegt darin, dass die weitere Netzwerkentität von der bevorstehenden Sendeleistungsreduzierung der zweiten Netzwerkentität informiert wird und nicht gleichzeitig seine Sendeleistung reduziert. Damit kann das Verfahren abgestimmt werden auf verschiedene mögliche Störquellen, so dass die hauptsächliche Störquelle identifiziert werden kann. Damit ist das Verfahren besonders genau und effizient.

Gemäß einer Ausführungsform umfasst das Verfahren ein Aussenden einer weiteren Quittungsmeldung über einen Abschluss des Reduzierens der Sendeleistung von der zweiten Netzwerkentität an die erste Netzwerkentität nach dem Reduzieren der Sendeleistung der zweiten Netzwerkentität.

Der Vorteil des Aussendens der weiteren Quittungsmeldung an die erste Netzwerkentität liegt darin, dass die erste Netzwerkentität davon unterrichtet wird, dass die zweite Netzwerkentität ihre Sendeleistung so weit wie möglich reduziert hat. Falls das Störsignal dennoch weiterhin unverändert detektiert wird, kann die zweite Netzwerkentität nicht der hauptsächliche (dominante) Störer sein. Reduziert sich der Störeinfluss teilweise, ist zumindest einer der relevanten Störer identifiziert (Teilerfolg).

Gemäß einer Ausführungsform umfasst das Verfahren ein Aussenden einer weiteren Steuerinformation über einen Zustand der Störeinflussverringerung von der ersten Netzwerkentität zu der zweiten Netzwerkentität, wobei der Zustand einen Erfolg anzeigt, wenn das Störsignal einen Schwellwert kreuzt.

Der Vorteil des Aussendens der weiteren Steuerinformation an die zweite Netzwerkentität über den Zustand der Störeinflussverringerung liegt darin, dass die zweite Netzwerkentität bei Meldung eines Erfolges eine weitere Sendeleistungsreduzierung nicht mehr vornehmen braucht. Die zweite Netzwerkentität wird damit in die Lage versetzt eine optimale Sendeleistung einzustellen, bei der sie mit größtmöglicher Reichweite senden kann ohne dass das Störsignal in der ersten Netzwerkentität einen kritischen Wert annimmt.

Gemäß einer Ausführungsform umfasst das Verfahren ein Beibehalten der reduzierten Sendeleistung in der zweiten Netzwerkentität, wenn der Zustand der Störeinflussverringerung zumindest einen Teilerfolg anzeigt, andernfalls Rückgängigmachen des Reduzierens der Sendeleistung in der zweiten Netzwerkentität.

Bei Erfolg oder Teilerfolg der Störeinflussverringerung kann die zweite Netzwerkentität mit der gerade sukzessive eingestellten Sendeleistung senden, während ein Misserfolg (d. h. keine erkennbare Änderung des Störeinflusses) die zweite Netzwerkentität darüber informiert, dass die Störung nicht von ihr herrührt, so dass sie auch wieder mit dem ursprünglichen Sendepegel senden kann. Das Verfahren ist somit auf mehrere mögliche Störer abgestimmt. Der verantwortliche Störer kann gefunden und dazu gebracht werden, die Störung einzustellen.

Gemäß einer Ausführungsform umfasst das Verfahren ein Aussenden der Steuerinformation über den Störfrequenzbereich von der ersten Netzwerkentität zu einer dritten Netzwerkentität, falls das Störsignal nach dem Reduzieren der Sendeleistung der zweiten Netzwerkentität durch die erste Netzwerkentität weiterhin detektiert wird; und ein Reduzieren einer Sendeleistung der dritten Netzwerkentität in dem Störfrequenzbereich ansprechend auf einen Empfang der Steuerinformation durch die dritte Netzwerkentität.

Das Verfahren kann mit einer Vielzahl von Netzwerkentitäten betrieben werden und ist darauf ausgerichtet, den verantwortlichen Störer automatisch zu finden und ihn anzusteuern, die Störung zu beseitigen. Dabei sind keine manuellen Eingriffe erforderlich.

Gemäß einer Ausführungsform des Verfahrens umfasst das Kommunikationsnetzwerk ein drahtgebundenes Netzwerk mit der zweiten Netzwerkentität und ein drahtloses Netzwerk mit der ersten Netzwerkentität.

Das Verfahren lässt sich vorteilhaft sowohl in drahtgebundenen Netzwerken als auch in drahtlosen Netzwerken einsetzen. Es können damit aber auch Störeinwirkungen von drahtgebundenen Netzwerken auf drahtgebundene Netzwerke oder von drahtlosen Netzwerken auf drahtlose Netzwerke verringert bis unterdrückt werden.

Gemäß einem Aspekt betrifft die Erfindung eine Netzwerkentität zur Kommunikation über ein Kommunikationsnetzwerk mit einer Kommunikationsnetzwerkschnittstelle zum Aussenden von Sendesignalen über das Kommunikationsnetzwerk und zum Empfangen von Empfangssignalen über das Kommunikationsnetzwerk; wobei die Kommunikationsnetzwerkschnittstelle ausgebildet ist, ein Störsignal in einem Störfrequenzbereich zu empfangen, und ansprechend auf den Empfang des Störsignals eine Steuerinformation zur Senkung einer Sendeleistung in dem Störfrequenzbereich auszusenden.

Solche Netzwerkentitäten nutzen die Fähigkeit von bekannten Funkempfängern als Störsenken aus, eine Funkstörung anhand der Empfangsqualität zu registrieren. Auch die Fähigkeit von gängigen leitungsgebundenen Übertragungsverfahren, bestimmte Frequenzbereiche ihres Nutzspektrums auszublenden - unter weitgehender Beibehaltung der Bitrate und Übertragungsqualität, lässt sich gut für die hier beschriebenen Netzwerkentitäten ausnutzen. Gängige PLC- oder DSL-Systeme arbeiten mit Mehrfrequenz-Trägerverfahren und können die Bitbelegung der Träger den Übertragungsverhältnissen anpassen. Auch können Frequenzbänder software-gesteuert komplett ausgeblendet werden. Weiterhin bieten die Verfahren die grundsätzliche Möglichkeit, die Bitbelegung der Träger während des Betriebs zu ändern, um z. B. auf dynamisch auftretende Verschlechterung der Übertragungsverhältnisse in bestimmten Frequenzbereichen zu reagieren. Diese vorteilhaften Funktionen werden in den beschriebenen Netzwerkentitäten genutzt.

Gemäß einer Ausführungsform der Netzwerkentität ist die Kommunikationsnetzwerkschnittstelle ausgelegt, um die Steuerinformation über einen drahtlosen Nahbereichs-Kommunikationskanal auszusenden.

Niederbitratige, drahtlose Kommunikationstechniken für den Nahbereich (z. B. Zigbee), die z. Zt. insbesondere für den Masseneinsatz bei M2M-Anwendungen auf den Markt kommen, eignen sich besonders für den Einsatz als Kommunikationsschnittstellenprotokoll für derartige Netzwerkentitäten.

Gemäß einem Aspekt betrifft die Erfindung eine Netzwerkentität zur Kommunikation über ein Kommunikationsnetzwerk, mit: einer Kommunikationsnetzwerkschnittstelle zum Aussenden von Sendesignalen über das Kommunikationsnetzwerk und zum Empfangen von Empfangssignalen über das Kommunikationsnetzwerk, wobei die Kommunikationsnetzwerkschnittstelle ausgebildet ist, eine Steuerinformation zu empfangen, welche einen Störfrequenzbereich anzeigt, und ansprechend auf den Empfang der Steuerinformation eine Sendeleistung der Netzwerkentität in dem Störfrequenzbereich zu reduzieren.

Eine derartige Netzwerkentität ist in der Lage, eine automatische Entstörung vorzunehmen ohne dass ein manueller Eingriff durch Bedienpersonal erforderlich ist.

Gemäß einem Aspekt betrifft die Erfindung ein Verfahren zur Kommunikation über ein Kommunikationsnetzwerk, mit: Empfangen eines Störsignals in einem Störfrequenzbereich durch eine Netzwerkentität; und ansprechend auf das Empfangen des Störsignals, Aussenden einer Steuerinformation durch die Netzwerkentität zur Senkung einer Sendeleistung in dem Störfrequenzbereich.

Das Verfahren lässt sich vorteilhaft in einer Netzwerkentität implementieren, um einen automatischen Entstörmechanismus zwischen verschiedenen Netzwerkentitäten umzusetzen.

Gemäß einem Aspekt betrifft die Erfindung ein Verfahren zur Kommunikation über ein Kommunikationsnetzwerk, mit: Empfangen einer Steuerinformation durch eine Netzwerkentität, wobei die Steuerinformation einen Störfrequenzbereich anzeigt; und ansprechend auf das Empfangen der Steuerinformation durch die Netzwerkentität, Reduzieren einer Sendeleistung der Netzwerkentität in dem Störfrequenzbereich.

Das Verfahren lässt sich vorteilhaft in einer Netzwerkentität implementieren, die damit automatisch angesteuert werden kann, ihre Sendeleistung zu reduzieren und damit eine von ihr verursachte Störung zu unterdrücken ohne dass ein manueller Eingriff notwendig wird.

Aspekte der Erfindung stellen einen automatischen Entstörmechanismus zwischen Netzwerkentitäten dar, wenn die gegenseitige Störung durch überlappende Nutzung von Frequenzbereichen für die Kommunikation verursacht wird. Die störende Netzwerkentität, d.h. der Störer, sollte in der Lage ist, seine Frequenznutzung flexibel zu gestalten. Die beiden Netzwerkentitäten können sowohl leitungsgebunden als auch drahtlos sein.

Aspekte der Erfindung lösen mögliche Beeinflussungen zwischen leitungsgebunden Übertragungsverfahren, die auf metallischen Leitungen arbeiten, und Funkdiensten. So speisen z. B. PLC oder DSL zur Erzielung hoher Datenraten (typisch: bis 100 Mbit/s) ein breites Nutzsignalspektrum mit hohen Frequenzobergrenzen in die Leitung ein. Dafür sind die gebräuchlichen Leitungstypen und im Fall des Stromnetzes die Netzstruktur jedoch nicht ausgelegt. Die hier beschriebenen Netzwerkentitäten reduzieren die Störsignalbeeinträchtigung durch den Einsatz von derartigen PLC oder DSL Verfahren, insbesondere bei hohen Datenraten und breiten Nutzsignalspektren.

Das hier beschriebene erfindungsgemäße Verfahren zur Verringerung von Störeinflüssen kommt mit verschiedenen parasitären Hf-Effekten wie Reflektionen, Störeinkopplungen usw. zurecht, auch solchen Störeinflüssen, die zeitlich schwanken können, und stellt eine qualitativ hochwertige Übertragung sicher. Durch die Wahl robuster Modulationstechniken, geeigneter Fehlerkodierungsverfahren und anderer aus der Nachrichtentechnik bekannter Prinzipien für die Übertragung über gestörte Kanäle wird eine optimale Datenübertragung sichergestellt. Die Verwendung adaptiver Methoden basierend auf Mehrträgerverfahren wie DMT oder OFDM ermöglicht das selektive Ausblenden von Frequenzbereichen, in denen aufgrund ungünstiger Impedanzverhältnisse, niedriger Signal-Störgeräusch-Abstände oder anderer Faktoren keine Übertragung möglich ist. Das hier beschriebene erfindungsgemäße Verfahren verwendet diese Adaptivität für die Lösung der oben beschriebenen Probleme.

Die aus Sicht der Hochfrequenzübertragung nicht-optimale Leitungsinfrastruktur hat auch eine Auswirkung auf die Umgebung des Übertragungssystems. Ein relativ großer Teil der als Nutzsignal eingespeisten Energie wird als sog. parasitäre Störemission in die Umgebung abgestrahlt, die in der Umgebung der Übertragungssystems den über gesetztliche Vorgaben garantierten Empfang von Funkdiensten wie Radio, TV, Flugfunk, Behördenfunk usw. in unzulässiger Weise beeinträchtigen kann. Mit dem erfindungsgemäßen Verfahren lassen sich diese Störeinflüsse weitgehend reduzieren.

In der klassischen EMV-Betrachtung fungiert das auf der Leitung arbeitende Verfahren als Störer und der Funkempfänger als Störsenke. Im Extremfall, wenn etwa sicherheitsrelevante Funkdienste gestört werden, muss der Nutzer des leitungsgebundenen Übertragungsverfahrens sein Equipment dauerhaft stilllegen. Aber auch in weniger kritischen Fällen drohen Konflikte mit Nachbarn, die auf einen einwandfreien Funkempfang Wert legen. Bei Verwendung des erfindungsgemäßen Verfahrens treten derartige Konflikte erst gar nicht auf.

Weitere Ausführungsbeispiele werden Bezug nehmend auf die beiliegenden Zeichnungen erläutert. Es zeigen:
Fig. 1 eine schematische Darstellung eines herkömmlichen Kommunikationsnetzwerks 100, bei dem Störeinflüsse eines drahtgebundenen Netzwerks auf ein Funknetzwerk durch manuellen Eingriff behoben werden müssen;
Fig. 2 eine schematische Darstellung eines Kommunikationsnetzwerks 200 mit einer ersten und einer zweiten Netzwerkentität gemäß einer Ausführungsform;
Fig. 3 eine schematische Darstellung eines Verfahrens 300 zur Verringerung von Störeinflüssen in einem Kommunikationsnetzwerk mit einer ersten Netzwerkentität und einer zweiten Netzwerkentität gemäß einer Ausführungsform;
Fig. 4 eine schematische Darstellung einer Netzwerkentität 400 mit einer Kommunikationsnetzwerkschnittstelle gemäß einer Ausführungsform;
Fig. 5 eine schematische Darstellung einer Netzwerkentität 500 mit einer Kommunikationsnetzwerkschnittstelle gemäß einer Ausführungsform;
Fig. 6 eine schematische Darstellung eines Verfahrens 600 zur Kommunikation über ein Kommunikationsnetzwerk gemäß einer Ausführungsform; und
Fig. 7 eine schematische Darstellung eines Verfahrens 700 zur Kommunikation über ein Kommunikationsnetzwerk gemäß einer Ausführungsform.

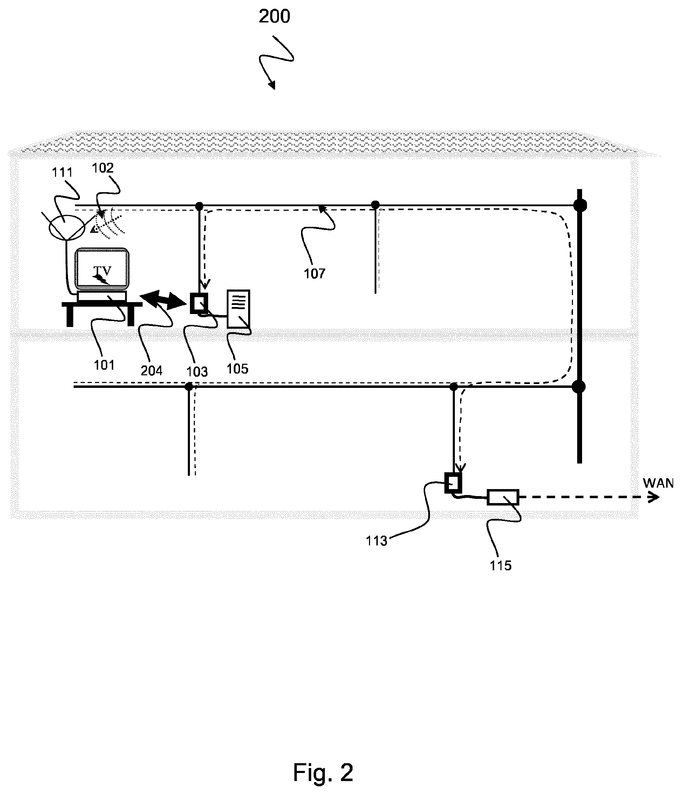

Fig. 2 zeigt eine schematische Darstellung eines Kommunikationsnetzwerks 200 mit einer ersten 101 und einer zweiten 103 Netzwerkentität gemäß einer Ausführungsform. Das in Fig. 2 schematisch dargestellte Kommunikationsnetzwerk 200, das in einem Gebäude verlegt sein kann, umfasst eine erste Netzwerkentität 101 und eine zweite Netzwerkentität 103. In Fig. 2 ist exemplarisch eine Störsituation zwischen der ersten Netzwerkentität 101, beispielsweise einem DVB-Empfänger 101, und der zweiten Netzwerkentität 103, beispielsweise einem ersten PLC Adapter 103 eines PLC-Systems mit zwei an das Stromnetz 107 angeschlossenen PLC Adaptern 103, 113, dargestellt. Das PLC-System 103 dient zur Datenübertragung über die Stromleitung 107 zwischen einem Computer 105 und dem WAN-Router 115 in einem anderen Teil des Gebäudes. Die dadurch hervorgerufene parasitäre Störemission 102 fällt in den DVB-T-Frequenzbereich und verhindert somit den störungsfreien TV-Empfang über die Antenne 111 des DVB-Empfängers 101.

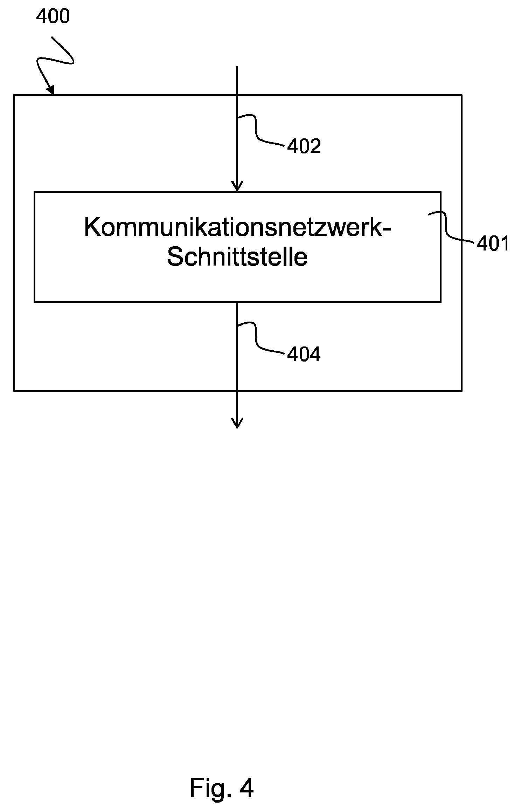

Die erste Netzwerkentität 101 zur Kommunikation über das Kommunikationsnetzwerk 200 umfasst eine Kommunikationsnetzwerkschnittstelle 401 entsprechend der unten beschriebenen Darstellung in Fig. 4 zum Aussenden von Sendesignalen über das Kommunikationsnetzwerk 200 und zum Empfangen von Empfangssignalen über das Kommunikationsnetzwerk 200. Die Kommunikationsnetzwerkschnittstelle 401 empfängt ein Störsignal 102, 402 in einem Störfrequenzbereich und sendet ansprechend auf den Empfang des Störsignals 102, 402 eine Steuerinformation 404 zur Senkung einer Sendeleistung in dem Störfrequenzbereich aus. In einer Ausführungsform sendet die Kommunikationsnetzwerkschnittstelle 401 die Steuerinformation 404 über einen drahtlosen Nahbereichs-Kommunikationskanal 204 aus.

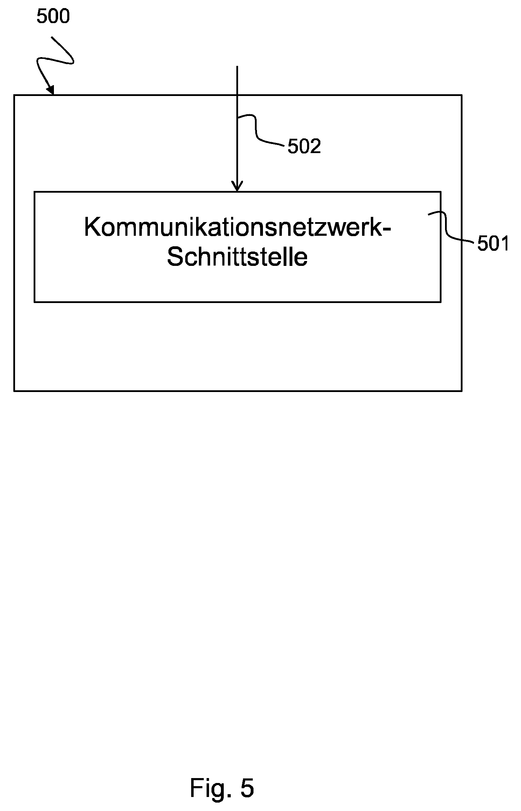

Die zweite Netzwerkentität 103 zur Kommunikation über ein Kommunikationsnetzwerk 200 umfasst eine Kommunikationsnetzwerkschnittstelle 501 entsprechend der unten beschriebenen Darstellung in Fig. 5 zum Aussenden von Sendesignalen über das Kommunikationsnetzwerk 200 und zum Empfangen von Empfangssignalen über das Kommunikationsnetzwerk 200. Die Kommunikationsnetzwerkschnittstelle empfängt eine Steuerinformation 502, welche einen Störfrequenzbereich anzeigt, und reduziert ansprechend auf den Empfang der Steuerinformation 502 eine Sendeleistung in dem Störfrequenzbereich.

Sowohl die Störsenke, d.h. die erste Netzwerkentität 101 als auch die potentiellen Störer, d.h. die zweite Netzwerkentität 103 sind an den Kommunikationskanal 204 angeschlossen, der einen Informationsaustausch untereinander ermöglicht.

Im Störungsfall erkennt die Störsenke 101, z. B. ein DVB-T-Empfänger, automatisch, dass ihr Nutzfrequenzbereich durch ein relativ hohes Hintergrundgeräusch 102 gestört ist. Die Störsenke 101 erzeugt eine Steuerinformation, welche sie über den für diesen Zweck vorgesehenen Kommunikationskanal 204, beispielsweise per Rundmeldung aussendet. Potentielle Störer in der Umgebung, in Figur 2 ist das die zweite Netzwerkentität 103, empfangen diese Steuerinformation. Als Indikator können der Störsenke 101 beispielsweise auftretende Bitfehler dienen. Die Steuerinformation bzw. die Rundmeldung (Broadcast) sollte zumindest den gestörten Frequenzbereich umfassen, kann aber auch durch weitere relevante Daten ergänzt werden.

Die potentiellen Störer 103 in der Umgebung empfangen die Steuerinformation bzw. die Rundnachricht und reduzieren - falls die gestörte Frequenz in den Nutzfrequenzbereich fällt - sukkzessive probeweise ihren Sendepegel. Ist dies erfolgreich, so quittiert die Störsenke 101 das durch ein entsprechendes "Erfolgssignal". Falls nicht, dann wird eine Pegelreduzierung des nächsten Übertragungssystem, d.h. einer weiteren potentiell störenden Netzwerkentität in der Umgebung der ersten Netzwerkentität 101, veranlasst. Dies wird solange fortgesetzt, bis alle Übertragungssysteme in der Umgebung diesen Vorgang durchgeführt haben.

In einer Ausführungsform des Übertragungskanals 204 zwischen der Störsenke 101 und Störern 103 werden zur Kommunikation niederbitratige Funkverfahren genutzt, die in einem eigenen, zugewiesenen Frequenzbereich arbeiten und deren Reichweite auf das Gebäude, in dem das leitungsgebundene Übertragungssystem betrieben wird, und ggf. direkte Nachbargebäude beschränkt ist. In einer Ausführungsform erfolgt die Kommunikation über ein Zigbee Verfahren, d.h. über einen Funknetz-Standard basierend auf der IEEE 802.15.4 Standardisierung, der es ermöglicht, Haushaltsgeräte, Sensoren, und andere Geräte auf Kurzstrecken von 10 bis etwa 100 Meter zu verbinden. Alternativ können auch andere Verfahren eingesetzt werden, beispielsweise Bluetooth, IrDA, etc. In einer weiteren Ausführungsform erfolgt die Kommunikation auf IP-Ebene im Heimnetzwerk. In einer alternativen Ausführungsform erfolgt die Kommunikation leitungsgebunden über ein eigenes Leitungsnetzwerk, das potentielle Störer 103 und Störsenken 101 verbindet.

In einer weiteren Ausführungsform wird die Entstörung in bestimmten Frequenzbereichen manuell ausgelöst, beispielsweise wenn im Not- oder Katastrophenfall sicherheitsrelevante Frequenzen freigehalten werden müssen. Der Kommunikationskanal 204 kann dann beispielsweise durch eine Leitwarte genutzt werden, um der zweiten Netzwerkentität 103 zu signalisieren, bestimmte Frequenzen freizuhalten. Das Kommunikationsprotokoll über den Kommunikationskanal 204 kann prinzipiell dem oben beschriebenen Verfahren zur Entstörung entsprechen. Auch die erste Netzwerkentität 101 kann nach dem gleichen Verfahren angesteuert werden, vorbestimmte Frequenzen freizuhalten.

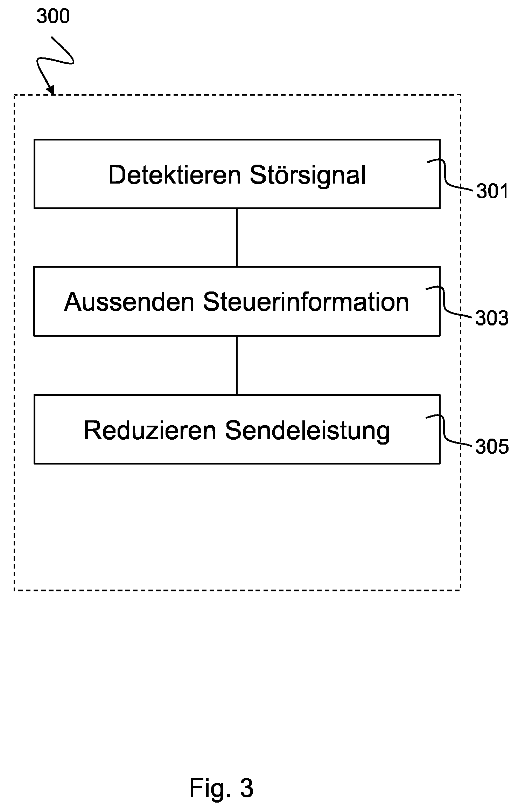

Fig. 3 zeigt eine schematische Darstellung eines Verfahrens 300 zur Verringerung von Störeinflüssen in einem Kommunikationsnetzwerk 200 mit einer ersten Netzwerkentität 101 und einer zweiten Netzwerkentität 103 gemäß einer Ausführungsform. Das Verfahren 300 kann in einer zweiten Netzwerkentität 103, wie oben in Fig. 2 beschrieben, eingesetzt werden, um ein Kommunikationsnetzwerk 200 zu entstören oder zumindest Störeinflüsse in dem Kommunikationsnetzwerk 200 zu reduzieren. Alternativ oder zusätzlich kann das Verfahren 300 auch in der ersten Netzwerkentität 101 eingesetzt werden.

Das Verfahren 300 umfasst Detektieren 301 eines Störsignals 102 in einem Störfrequenzbereich durch die erste Netzwerkentität 101; Aussenden 303 einer Steuerinformation über den Störfrequenzbereich von der ersten Netzwerkentität 101 zu der zweiten Netzwerkentität 103; und Reduzieren 305 einer Sendeleistung der zweiten Netzwerkentität 103 in dem Störfrequenzbereich ansprechend auf einen Empfang der Steuerinformation durch die zweite Netzwerkentität 103.

In einer Ausführungsform des Verfahrens 300 wird die Steuerinformation als Rundnachricht, d.h. als Broadcast-Nachricht, ausgesendet, so dass sie von einer Vielzahl von Geräten empfangen werden kann. In einer Ausführungsform des Verfahrens 300 erfolgt das Reduzieren der Sendeleistung in der zweiten Netzwerkentität 103 sukzessive, d.h. nach und nach, beispielsweise so lange bis eine Verbesserung eingetreten ist oder bis eine vorgegebene Leistungsschwelle erreicht ist. In einer Ausführungsform des Verfahrens 300 umfasst der Schritt des Detektierens des Störsignals ein Detektieren einer auf das Störsignal ansprechenden quantitativen Größe in der ersten Netzwerkentität 101. Die quantitative Größe kann beispielsweise eine Bitfehlerrate (BER) sein, die sich unter Einfluss des Störsignals erhöht. Die quantitative Größe kann eine Korrelationsfunktion sein, beispielsweise eine spektrale Störleistungsdichte, die den Einfluss des Störsignals aufzeigt. In einer Ausführungsform umfasst das Verfahren 300 den Schritt: Aussenden einer Quittungsmeldung über einen Beginn des Reduzierens der Sendeleistung von der zweiten Netzwerkentität 103 an eine weitere Netzwerkentität ansprechend auf einen Empfang der Steuerinformation über den Störfrequenzbereich von der ersten Netzwerkentität 101. Bei Empfang der Steuerinformation kann die zweite Netzwerkentität 103 signalisieren, dass sie ihre Sendeleistung reduziert. Das Signalisieren kann über eine Rundmeldung erfolgen, so dass weitere Netzwerkentitäten erkennen, dass die zweite Netzwerkentität ihre Sendeleistung reduziert und somit ein Reduzieren der Sendeleistung in den weiteren Netzwerkentitäten zunächst nicht erforderlich ist. In einer Ausführungsform umfasst das Verfahren 300 den Schritt: Aussenden einer weiteren Quittungsmeldung über einen Abschluss des Reduzierens der Sendeleistung von der zweiten Netzwerkentität 103 an die erste Netzwerkentität 101 nach dem Reduzieren der Sendeleistung der zweiten Netzwerkentität 103.

In einer Ausführungsform umfasst das Verfahren 300 den Schritt: Aussenden einer weiteren Steuerinformation über einen Zustand der Störeinflussverringerung von der ersten Netzwerkentität 101 zu der zweiten Netzwerkentität 103, wobei der Zustand einen Erfolg oder Teilerfolg anzeigt, wenn das Störsignal 102 einen Schwellwert kreuzt bzw. sich oberhalb des Schwellwerts zumindest reduziert. Die erste Netzwerkentität 101 detektiert, ob das Störsignal 102 aufgrund der Sendeleistungsreduzierung in der zweiten Netzwerkentität 103 ausreichend reduziert wurde, beispielsweise durch Schwellwertvergleich. Wenn das Störsignal 102 oder eine Leistung des detektieren Störsignals 102 einen Schwellwert unterschreitet, der signalisiert, dass das Störsignal 102 ausreichend verringert wurde, sendet die erste Netzwerkentität 101 die weitere Steuerinformation, in der der Erfolg der Störreduzierung signalisiert wird, an die zweite Netzwerkentität 103.

In einer Ausführungsform umfasst das Verfahren 300 den Schritt: Beibehalten der reduzierten Sendeleistung in der zweiten Netzwerkentität 103, wenn der Zustand der Störeinflussverringerung einen (teilweisen) Erfolg anzeigt, andernfalls Rückgängigmachen des Reduzierens 305 der Sendeleistung in der zweiten Netzwerkentität 103. Falls der Störeinfluss ausreichend reduziert wurde aufgrund der Sendeleistungsreduzierung in der zweiten Netzwerkentität 103, d.h. der Zustand der Störeinflussverringerung zeigt zumindest einen teilweisen Erfolg an, behält die zweite Netzwerkentität 103 ihre reduzierte Sendeleistung bei. In diesem Fall zeigt die Detektion in der ersten Netzwerkentität 101 eine (Mit-)Verantwortlichkeit des ursprünglichen Sendesignalpegels der zweiten Netzwerkentität 103 für die Störung der ersten Netzwerkentität 101. Falls der Störeinfluss nicht reduziert wurde aufgrund der Sendeleistungsreduzierung in der zweiten Netzwerkentität 103 und der Zustand der Störeinflussverringerung somit keinen Erfolg anzeigt, kann die Sendeleistung der zweiten Netzwerkentität 103 wieder auf ihren ursprünglichen Wert zurückgesetzt werden. In diesem Fall zeigt die Detektion in der ersten Netzwerkentität 101 keinen dominanten Beitrag des Sendesignalpegels der zweiten Netzwerkentität 103 zu der Störung der ersten Netzwerkentität 101.

In einer Ausführungsform umfasst das Verfahren 300 die Schritte: Aussenden 303 der Steuerinformation über den Störfrequenzbereich von der ersten Netzwerkentität 101 zu einer dritten Netzwerkentität, falls das Störsignal 102 nach dem Reduzieren 305 der Sendeleistung der zweiten Netzwerkentität 103 durch die erste Netzwerkentität 101 weiterhin im kritischen Maße detektiert wird; und Reduzieren einer Sendeleistung der dritten Netzwerkentität in dem Störfrequenzbereich ansprechend auf einen Empfang der Steuerinformation durch die dritte Netzwerkentität. Falls die Störung nicht oder nicht allein von der zweiten Netzwerkentität herrührt, werden die oben beschriebenen Verfahrensschritte mit einer dritten Netzwerkentität wiederholt. Die dritte Netzwerkentität kann eine weitere Netzwerkentität in der Umgebung der ersten Netzwerkentität sein, die für den Störeinfluss verantwortlich sein kann. Falls auch die Sendeleistungsreduzierung der dritten Netzwerkentität keine ausreichende Reduktion des Störpegels in der ersten Netzwerkentität bewirkt, kann das Verfahren sukzessive auf eine vierte, fünfte etc. Netzwerkentität ausgedehnt werden bis eine ausreichende Reduktion des Störsignals in der ersten Netzwerkentität eintritt. Das Verfahren kann aber auch abgebrochen werden, nachdem eine gegebene Anzahl an Netzwerkentitäten angesteuert worden sind, oder nachdem eine gewisse Zeit vergangen ist ohne dass eine Besserung der Störsituation eingetreten ist. Unter Umständen muss das Verfahren mehrmals durchlaufen werden, etwa wenn die dritte Netzwerkentität den dominanten Störbeitrag stellt, der einen kleineren, aber noch relevanten Störbeitrag der zweiten Netzwerkentität verdeckt.

In einer Ausführungsform des Verfahrens 300 umfasst das Kommunikationsnetzwerk 200 ein drahtgebundenes Netzwerk, beispielsweise ein Power Line Netzwerk oder ein DSL Netzwerk, mit der zweiten Netzwerkentität 103 und ein drahtloses Netzwerk, beispielsweise ein LTE Netzwerk, ein WLAN Netzwerk oder ein DVB Netzwerk, mit der ersten Netzwerkentität 101.

Eine Ausführungsform des Verfahrens 300 wird im Folgenden anhand der Schritte 1 bis 8 näher beschrieben:
- Schritt 1:: Festlegung und Messung von Parametern (z. B. SNR, BER) zur Beurteilung der Übertragungsqualität durch die Störsenke und gleichzeitige Festlegung von Schranken zur Qualitätssicherung.
- Schritt 2:: Bei Überschreiten einer/mehrerer Schranken Aussendung eines Broadcast-Signals durch die Störsenke über einen universellen Kommunikationskanal, wobei das Broadcast-Signal zumindest die Information des gestörten Frequenzbereichs enthält.
- Schritt 3:: Empfang des Broadcast-Signals durch alle potentiellen Störquellen - Prüfung, ob der gestörte Frequenz durch die Störquelle genutzt wird.
- Schritt 4:: Bei festgestellter Frequenzüberlappung Rücksendung eines Quitierungssignals von einer der "überlappenden" Störquellen mit Übermittlung einer entsprechenden eindeutigen Kennung. Damit Aufbau eines direkten Kommunikationskanals zwischer dieser Störquelle und Störsenke. Alle anderen Störquelle warten zunächst ab. Zur Vermeidung von Datenkollisionen, wenn zwei Störquellen gleichzeitig ein Quitierungssignal senden, werden geeignete Verfahren/Protokolle für die Kommunikation zwischen Störquelle und Störsenke verwendet.
- Schritt 5:: Probeweise Reduzierung der spektralen Leistungsdichte im gestörten Frequenzbereich durch die mit der Störsenke in Verbindung stehende Störquelle. Durch die Störsenke wird geprüft, wie sich die Reduzierung auf die (zuvor unzureichende) Übertragungsqualität im gestörten Frequenzbereich auswirkt.
- Schritt 6:: Bei ausreichender Verbesserung der Übertragungsqualtität Aussendung eines entsprechenden Erfolgssignals durch die Störsenke an alle potentiellen Störquellen innerhalb eines bestimmten Zeitintervalls. Die identifizierte Störquelle senkt die spektrale Leistungsdichte dauerhaft ab. Erfolgreiche Beendigung des automatischen Entstörprozesses.
- Schritt 7:: Anderenfalls sendet die Störsenke eine Information über den Misserfolg einer ausreichenden Störreduktion an alle potentiellen Störer. Anschließend Aufbau eines Kommunikationskanals zwischen einer anderen potentiellen Störquelle und der Störsenke und Wiederholung des Schritts 5).
- Schritt 8:: Der automatische Entstörprozess wird erfolglos beendet, wenn alle potentiellen Störer mit überlappender Frequenznutzung in der Umgebung angesprochen wurden, ohne dass sich die Übertragungsqualtität im gestörten Frequenzbereich ausreichend verbessert hat.

Die im folgenden beschriebene weitere Ausführungsform des Verfahrens stellt den Spezialfall einer Störsenke und zweier potenzieller Störer (hier zweier leitungsgebundener Übertragungssysteme) exemplarisch anhand von Einzelschritten dar. Dabei ist das zweite System der tatsächliche Störer, der nach einem erfolglosen Versuch erkannt wird.

| **Schritt** | **Aktion** | **Störsenke** | **Pot. Störer #1** | **Pot. Störer #2** |
|---|---|---|---|---|
| 1 | Störsenke | Identifizierung einer Störung bei der Frequenz f1 | | |
| 2a | Kommunikation (Störsenke) | Sende Rundmeldung <Störung im Frequenzbereich f1± Δf> | Empfang Rundmeldg. | Empfang Rundmeldg. |
| 2b | Kommunikation (Störer #1) | Empfang Rückmeldung | Sende Rückmeldung <PSD-Reduzierung im Frequenzbereich f1± Δf wird durch Gerät 1 vorgenommen> | Empfang Rückmeldg. |
| 2c | Störer #1 | Monitoring Störgeräusch bei f1 | PSD-Reduzierung bei f1± Δf vornehmen | Keine Aktion |
| 2d | Kommunikation (Störer #1) | Empfang Rundmeldung | Sende Meldung an Störsenke <Reduzierung im Frequenzbereich f1± Δf durch Gerät 1 erfolgt> | |
| 2e | Störsenke | Findet, dass keine Verbesserung eingetreten ist. | | |
| 2f | Kommunikation (Störsenke) | Sende Rundmeldung <Störung im Frequenzbereich f1± Δf. Kein | Empfang Meldung | Empfang Meldung |
| | | Einfluss von Gerät 1> | | |
| 2g | Störer #1 | PSD-Reduzierung rückgängig machen | | |
| 3a | Kommunikation (Störer #2) | Empfang Rückmeldung | | Sende Rückmeldung <PSD-Reduzierung im Frequenzbereich f1± Δf wird durch Gerät 2 vorgenommen> |
| 3b | Störer 2 | Monitoring Störgeräusch bei f1 | | PSD-Reduzierung bei f1 ± Δf vornehmen |
| 3c | Störsenke | Findet, dass ausreichende Verbesserung eingetreten ist. | | |
| 3d | Kommunikation (Störsenke) | Sende Rundmeldung <Erfolg für Störer 2> | Empfang Meldung | Empfang Meldung |
| 4 | Störer 2 | | | PSD-Reduzierung dauerhaft beibehalten |

Das oben tabellarisch angegebene Verfahren weist die folgenden Schritte auf:
- Schritt 1:: Die Störsenke identifiziert eine Störung bei der Frequenz f1.
- Schritt 2a:: Die Störsenke sendet eine Rundmeldung aus: "Störung im Frequenzbereich f1+/- Δf", welche von beiden potentiellen Störern #1 und #2 empfangen wird.
- Schritt 2b:: Der potentielle Störer #1 sendet eine Rückmeldung "PSD-Reduzierung im Frequenzbereich f1 +/- Δf wird durch Gerät 1, d.h. den potentiellen Störer #1 vorgenommen", welche von der Störsenke und dem potentiellen Störer #2 empfangen wird.
- Schritt 2c:: Der potentielle Störer #1 nimmt eine PSD-Reduzierung im Frequenzbereich f1 +/- Δf vor. Die Störsenke detektiert das Störgeräusch. Der potentielle Störer #2 nimmt keine Aktion vor.
- Schritt 2d:: Der potentielle Störer #1 sendet folgende Meldung an die Störsenke: "PSD-Reduzierung im Frequenzbereich f1+/- Δf durch Gerät 1 erfolgt", welche von der Störsenke empfangen wird.
- Schritt 2e:: Die Störsenke kann keine Verbesserung der Störsituation detektieren.
- Schritt 2f:: Die Störsenke sendet eine Rundmeldung aus: "Störung im Frequenzbereich f1+/- Δf. Kein Einfluss von Gerät 1", welche von beiden potentiellen Störern #1 und #2 empfangen wird.
- Schritt 2g:: Der potentielle Störer #1 macht seine PSD-Reduzierung rückgängig.
- Schritt 3a:: Der potentielle Störer #2 sendet eine Rückmeldung: "PSD-Reduzierung im Frequenzbereich f1+/- Δf wird durch Gerät 2, d.h. den potentiellen Störer #2 vorgenommen", welche von der Störsenke empfangen wird.
- Schritt 3b:: Der potentielle Störer #2 nimmt eine PSD-Reduzierung im Frequenzbereich f1 +/- Δf vor. Die Störsenke detektiert das Störgeräusch.
- Schritt 3c:: Die Störsenke detektiert eine ausreichende Verbesserung der Störsituation, beispielsweise ein Unterschreiten einer Schwelle, z.B. einer Bitfehlerrate.
- Schritt 3d:: Die Störsenke sendet eine Rundmeldung aus: "Erfolg für Störer 2", welche von beiden potentiellen Störern #1 und #2 empfangen wird.
- Schritt 4:: Der potentielle Störer #2 behält seine PSD-Reduzierung dauerhaft bei.

Das Verfahren kann auch auf mehr als zwei potentielle Störer angewendet werden. Dabei werden dann die Schritte 2a bis 2e bei erfolgloser Störreduzierung für weitere Störer wiederholt bis ein Erfolg eintritt und das Verfahren mit den Schritten 3a bis 3d und 4 endet.

Fig. 4 zeigt eine schematische Darstellung einer Netzwerkentität 400 mit einer Kommunikationsnetzwerkschnittstelle 401 gemäß einer Ausführungsform.

Die Netzwerkentität 400 zur Kommunikation über ein Kommunikationsnetzwerk umfasst eine Kommunikationsnetzwerkschnittstelle 401 zum Aussenden von Sendesignalen über das Kommunikationsnetzwerk und zum Empfangen von Empfangssignalen über das Kommunikationsnetzwerk. Die Kommunikationsnetzwerkschnittstelle 401 empfängt ein Störsignal 402 in einem Störfrequenzbereich, und sendet ansprechend auf den Empfang des Störsignals 402 eine Steuerinformation 404 zur Senkung einer Sendeleistung in dem Störfrequenzbereich aus.

Die Netzwerkentität 400 kann der ersten Netzwerkentität 101, wie oben in Bezug auf Fig. 2 und 3 beschrieben, entsprechen. In einer Ausführungsform sendet die Kommunikationsnetzwerkschnittstelle 401 die Steuerinformation 404 über einen drahtlosen Nahbereichs-Kommunikationskanal aus.

Fig. 5 zeigt eine schematische Darstellung einer Netzwerkentität 500 mit einer Kommunikationsnetzwerkschnittstelle 501 gemäß einer Ausführungsform.

Die Netzwerkentität 500 zur Kommunikation über ein Kommunikationsnetzwerk umfasst eine Kommunikationsnetzwerkschnittstelle 501 zum Aussenden von Sendesignalen über das Kommunikationsnetzwerk und zum Empfangen von Empfangssignalen über das Kommunikationsnetzwerk. Die Kommunikationsnetzwerkschnittstelle 501 empfängt eine Steuerinformation 502, welche einen Störfrequenzbereich anzeigt. Ansprechend auf den Empfang der Steuerinformation 502 reduziert die Netzwerkentität 500 ihre Sendeleistung in dem Störfrequenzbereich.

Die Netzwerkentität 500 kann der zweiten Netzwerkentität 103, wie oben in Bezug auf Fig. 2 und 3 beschrieben, entsprechen.

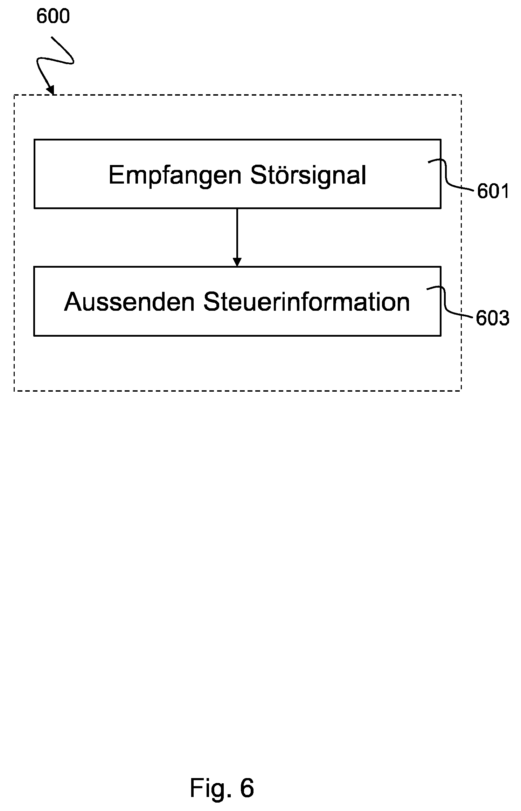

Fig. 6 zeigt eine schematische Darstellung eines Verfahrens 600 zur Kommunikation über ein Kommunikationsnetzwerk gemäß einer Ausführungsform.

Das Verfahren 600 dient zur Kommunikation über ein Kommunikationsnetzwerk und weist die Schritte auf: Empfangen 601 eines Störsignals in einem Störfrequenzbereich durch eine Netzwerkentität; und ansprechend auf das Empfangen 601 des Störsignals, Aussenden 603 einer Steuerinformation durch die Netzwerkentität zur Senkung einer Sendeleistung in dem Störfrequenzbereich.

Das Verfahren 600 kann in der Netzwerkentität 400 wie oben unter Figur 4 beschrieben implementiert sein. Das Verfahren 600 kann in der ersten Netzwerkentität 101 wie oben unter Figur 2 und 3 beschrieben implementiert sein.

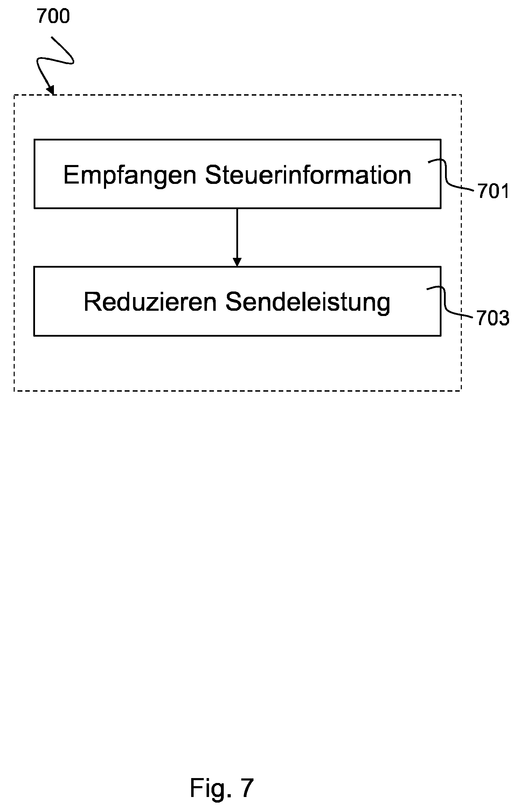

Fig. 7 zeigt eine schematische Darstellung eines Verfahrens 700 zur Kommunikation über ein Kommunikationsnetzwerk gemäß einer Ausführungsform.

Das Verfahren 700 dient zur Kommunikation über ein Kommunikationsnetzwerk und umfasst die Schritte: Empfangen 701 einer Steuerinformation durch eine Netzwerkentität, wobei die Steuerinformation einen Störfrequenzbereich anzeigt; und ansprechend auf das Empfangen 701 der Steuerinformation durch die Netzwerkentität, Reduzieren 703 einer Sendeleistung der Netzwerkentität in dem Störfrequenzbereich.

Das Verfahren 700 kann in der Netzwerkentität 500 wie oben unter Figur 5 beschrieben implementiert sein. Das Verfahren 700 kann in der zweiten Netzwerkentität 103 wie oben unter Figur 2 und 3 beschrieben implementiert sein.

### Bezugszeichenliste

- 100: PLC Netzwerk
- 101: erste Netzwerkentität
- 102: Störsignal
- 103: zweite Netzwerkentität, erste PLC Schnittstelle
- 104: Messdienst, manueller Eingriff
- 105: Computer
- 107: Stromleitungen
- 111: Funkempfang
- 113: zweite PLC Schnittstelle
- 115: Router
- 200: Kommunikationsnetzwerk
- 204: Kommunikationskanal, Nahbereichs-Kommunikationskanal
- 300: Verfahren zur Verringerung von Störeinflüssen
- 400: Netzwerkentität
- 500: Netzwerkentität
- 600: Verfahren zur Kommunikation über ein Kommunikationsnetzwerk
- 700: Verfahren zur Kommunikation über ein Kommunikationsnetzwerk

## Patentansprüche

1. Verfahren (300) zur Verringerung von Störeinflüssen in einem Kommunikationsnetzwerk (200) mit einer ersten Netzwerkentität (101) und einer zweiten Netzwerkentität (103), umfassend:
Detektieren (301) eines Störsignals (102) in einem Störfrequenzbereich durch die erste Netzwerkentität (101);
Aussenden (303) einer Steuerinformation über den Störfrequenzbereich von der ersten Netzwerkentität (101) zu der zweiten Netzwerkentität (103); und
Reduzieren (305) einer Sendeleistung der zweiten Netzwerkentität (103) in dem Störfrequenzbereich ansprechend auf einen Empfang der Steuerinformation durch die zweite Netzwerkentität (103).

2. Verfahren (300) nach Anspruch 1, wobei das Aussenden (303) der Steuerinformation das Aussenden der Steuerinformation als eine Rundnachricht umfasst.

3. Verfahren (300) nach Anspruch 1 oder Anspruch 2, wobei das Reduzieren (305) der Sendeleistung der zweiten Netzwerkentität (103) sukzessive in bestimmten, voreingestellten Leistungsschritten erfolgt.

4. Verfahren (300) nach einem der vorherigen Ansprüche, wobei das Detektieren (301) des Störsignals (102) ein Detektieren einer auf das Störsignal (102) ansprechenden quantitativen Größe, in der ersten Netzwerkentität (101) umfasst.

5. Verfahren (300) nach einem der vorherigen Ansprüche, umfassend:
Aussenden einer Quittungsmeldung über einen Beginn des Reduzierens (305) der Sendeleistung von der zweiten Netzwerkentität (103) an eine weitere Netzwerkentität ansprechend auf einen Empfang der Steuerinformation über den Störfrequenzbereich von der ersten Netzwerkentität (101).

6. Verfahren (300) nach einem der vorherigen Ansprüche, umfassend:
Aussenden einer weiteren Quittungsmeldung über einen Abschluss des Reduzierens der Sendeleistung von der zweiten Netzwerkentität (103) an die erste Netzwerkentität (101) nach dem Reduzieren der Sendeleistung der zweiten Netzwerkentität (103).

7. Verfahren (300) nach einem der vorherigen Ansprüche, umfassend:
Aussenden einer weiteren Steuerinformation über einen Zustand der Störeinflussverringerung von der ersten Netzwerkentität (101) zu der zweiten Netzwerkentität (103), wobei der Zustand einen Erfolg anzeigt, wenn das Störsignal (102) einen Schwellwert kreuzt.

8. Verfahren (300) nach Anspruch 7, umfassend:
Beibehalten der reduzierten Sendeleistung in der zweiten Netzwerkentität (103), wenn der Zustand der Störeinflussverringerung einen Erfolg oder zumindest einen Teilerfolg anzeigt, andernfalls Rückgängigmachen des Reduzierens (305) der Sendeleistung in der zweiten Netzwerkentität (103).

9. Verfahren (300) nach einem der vorherigen Ansprüche, umfassend:
Aussenden (303) der Steuerinformation über den Störfrequenzbereich von der ersten Netzwerkentität (101) zu einer dritten Netzwerkentität, falls das Störsignal (102) nach dem Reduzieren (305) der Sendeleistung der zweiten Netzwerkentität (103) durch die erste Netzwerkentität (101) weiterhin detektiert wird; und
Reduzieren einer Sendeleistung der dritten Netzwerkentität in dem Störfrequenzbereich ansprechend auf einen Empfang der Steuerinformation durch die dritte Netzwerkentität.

10. Verfahren (300) nach einem der vorherigen Ansprüche, wobei das Kommunikationsnetzwerk (200) ein drahtgebundenes Netzwerk mit der zweiten Netzwerkentität (103) und ein drahtloses Netzwerk mit der ersten Netzwerkentität (101) umfasst.

11. Netzwerkentität (101, 400) zur Kommunikation über ein Kommunikationsnetzwerk (200), mit:
einer Kommunikationsnetzwerkschnittstelle (401) zum Aussenden von Sendesignalen über das Kommunikationsnetzwerk (200) und zum Empfangen von Empfangssignalen über das Kommunikationsnetzwerk (200); wobei
die Kommunikationsnetzwerkschnittstelle (401) ausgebildet ist, ein Störsignal (102, 402) in einem Störfrequenzbereich zu empfangen, und ansprechend auf den Empfang des Störsignals (102, 402) eine Steuerinformation (404) zur Senkung einer Sendeleistung in dem Störfrequenzbereich auszusenden.

12. Netzwerkentität (101, 400) nach Anspruch 11, wobei die Kommunikationsnetzwerkschnittstelle (401) ausgelegt ist, die Steuerinformation (404) über einen drahtlosen Nahbereichs-Kommunikationskanal auszusenden.

13. Netzwerkentität (103, 500) zur Kommunikation über ein Kommunikationsnetzwerk (200), mit:
einer Kommunikationsnetzwerkschnittstelle (501) zum Aussenden von Sendesignalen über das Kommunikationsnetzwerk (200) und zum Empfangen von Empfangssignalen über das Kommunikationsnetzwerk (200), wobei
die Kommunikationsnetzwerkschnittstelle (501) ausgebildet ist, eine Steuerinformation (502) zu empfangen, welche einen Störfrequenzbereich anzeigt, und ansprechend auf den Empfang der Steuerinformation (502) eine Sendeleistung der Netzwerkentität (103, 500) in dem Störfrequenzbereich zu reduzieren.

14. Verfahren (600) zur Kommunikation über ein Kommunikationsnetzwerk, mit:
Empfangen (601) eines Störsignals in einem Störfrequenzbereich durch eine Netzwerkentität; und
ansprechend auf das Empfangen (601) des Störsignals, Aussenden (603) einer Steuerinformation durch die Netzwerkentität zur Senkung einer Sendeleistung in dem Störfrequenzbereich.

15. Verfahren (700) zur Kommunikation über ein Kommunikationsnetzwerk, mit:
Empfangen (701) einer Steuerinformation durch eine Netzwerkentität, wobei die Steuerinformation einen Störfrequenzbereich anzeigt; und
ansprechend auf das Empfangen (701) der Steuerinformation durch die Netzwerkentität, Reduzieren (703) einer Sendeleistung der Netzwerkentität in dem Störfrequenzbereich.

## Claims

1. A method (300) for reducing interference in a communication network (200) having a first network entity (101) and a second network entity (103), comprising:
detecting (301) an interference signal (102) in an interference frequency range by the first network entity (101);
transmitting (303) a control information about the interference frequency range from the first network entity (101) to the second network entity (103); and
reducing (305) a transmitting power of the second network entity (103) in the interference frequency range in response to a reception of the control information by the second network entity (103).

2. The method (300) according to claim 1, wherein the transmitting (303) of the control information comprises the transmitting of the control information as a broadcast message.

3. The method (300) according to claim 1 or 2, wherein the reducing (305) of the transmitting power of the second network entity (103) is carried out successively in specific preset power steps.

4. The method (300) according to any one of the preceding claims, wherein the detecting (301) of the interference signal (102) comprises detecting a quantitative variable responsive to the interference signal (102) in the first network entity (101).

5. The method (300) according to any one of the preceding claims, comprising:
transmitting an acknowledge notification about a start of the reducing (305) of the transmitting power from the second network entity (103) to a further network entity in response to a reception of the control information about the interference frequency range from the first network entity (101).

6. The method (300) according to any one of the preceding claims, comprising:
transmitting a further acknowledge notification about a completion of the reducing of the transmitting power from the second network entity (103) to the first network entity (101) after the reducing of the transmitting power of the second network entity (103).

7. The method (300) according to any one of the preceding claims, comprising:
transmitting of a further control information about a state of the interference reduction from the first network entity (101) to the second network entity (103), wherein the state indicates a success, when the interference signal (102) crosses a threshold value.

8. The method (300) according to claim 7, comprising:
maintaining the reduced transmitting power in the second network entity (103), when the state of the interference reduction indicates a success or at least a partial success, otherwise reversing the reducing (305) of the transmitting power in the second network entity (103).

9. The method (300) according to any one of the preceding claims, comprising:
transmitting (303) the control information about the interference frequency range from the first network entity (101) to a third network entity, if the interference signal (102) is still detected by the first network entity (101) after the reducing (305) of the transmitting power of the second network entity (103); and
reducing a transmitting power of the third network entity in the interference frequency range in response to a reception of the control information by the third network entity.

10. The method (300) according to any one of the preceding claims, wherein the communication network (200) comprises a wired network having the second network entity (103) and a wireless network having the first network entity (101).

11. A network entity (101, 400) for communicating over a communication network (200), comprising:
a communication network interface (401) for transmitting transmit signals over the communication network (200) and for receiving receive signals over the communication network (200); wherein
the communication network interface (401) is configured to receive an interference signal (102, 402) in an interference frequency range, and to transmit a control information (404) for lowering a transmitting power in the interference frequency range in response to the reception of the interference signal (102, 402).

12. The network entity (101, 400) according to claim 11, wherein the communication network interface (401) is configured to transmit the control information (404) over a wireless near range communication channel.

13. A network entity (103, 500) for communicating over a communication network (200), comprising:
a communication network interface (501) for transmitting transmit signals over the communication network (200) and for receiving receive signals over the communication network (200), wherein
the communication network interface (501) is configured to receive a control information (502) indicating an interference frequency range, and to reduce a transmitting power of the network entity (103, 500) in the interference frequency range in response to the reception of the control information (502).

14. A method (600) for communicating over a communication network, comprising:
receiving (601) an interference signal in an interference frequency range by a network entity; and
in response to the receiving (601) of the interference signal, transmitting (603) a control information by the network entity for lowering a transmitting power in the interference frequency range.

15. A method (700) for communicating over a communication network, comprising:
receiving (701) a control information by a network entity, wherein the control information indicates an interference frequency range; and
in response to the receiving (701) of the control information by the network entity, reducing (703) a transmitting power of the network entity in the interference frequency range.

## Revendications

1. Procédé (300) de réduction d'influences parasites dans un réseau de communication (200) comportant une première entité de réseau (101) et une deuxième entité de réseau (103), comprenant:
la détection (301) d'un signal parasite (102) dans une gamme de fréquences parasites par la première entité de réseau (101);
l'émission (303) d'une information de commande concernant la gamme de fréquences parasites de la première entité de réseau (101) vers la deuxième entité de réseau (103) ; et
la réduction (305) d'une puissance d'émission de la deuxième entité de réseau (103) dans la gamme de fréquences parasites en réponse à une réception de l'information de commande par la deuxième entité de réseau (103).

2. Procédé (300) selon la revendication 1, dans lequel l'émission (303) de l'information de commande comprend l'émission de l'information de commande sous la forme d'un message diffusé.

3. Procédé (300) selon la revendication 1 ou la revendication 2, dans lequel la réduction (305) de la puissance d'émission de la deuxième entité de réseau (103) s'effectue successivement selon des pas de puissance déterminés préréglés.

4. Procédé (300) selon l'une quelconque des revendications précédentes, dans lequel la détection (301) du signal parasite (102) comprend une détection d'une grandeur quantitative en réponse au signal parasite (102), dans la première entité de réseau (101).

5. Procédé (300) selon l'une quelconque des revendications précédentes, comprenant :
l'émission d'un message d'acquittement concernant un début de la réduction (305) de la puissance d'émission de la deuxième entité de réseau (103) vers une autre entité de réseau en réponse à une réception de l'information de commande concernant la gamme de fréquences parasites de la première entité de réseau (101).

6. Procédé (300) selon l'une quelconque des revendications précédentes, comprenant :
l'émission d'un autre message d'acquittement concernant une fin de la réduction de la puissance d'émission de la deuxième entité de réseau (103) vers la première entité de réseau (101) après la réduction de la puissance d'émission de la deuxième entité de réseau (103).

7. Procédé (300) selon l'une quelconque des revendications précédentes, comprenant :
l'émission d'une autre information de commande concernant un état de la diminution de l'influence parasite de la première entité de réseau (101) vers la deuxième entité de réseau (103), dans lequel l'état indique une réussite lorsque le signal parasite (102) franchit une valeur de seuil.

8. Procédé (300) selon la revendication 7, comprenant:
le maintien de la puissance d'émission réduite dans la deuxième entité de réseau (103), si l'état de la diminution de l'influence parasite indique une réussite ou au moins une réussite partielle, autrement, l'annulation de la réduction (305) de la puissance d'émission dans la deuxième entité de réseau (103).

9. Procédé (300) selon l'une quelconque des revendications précédentes, comprenant:
l'émission (303) de l'information de commande concernant la gamme de fréquences parasites de la première entité de réseau (101) vers une troisième entité de réseau, dans le cas où le signal parasite (102) est en outre détecté après la réduction (305) de la puissance d'émission de la deuxième entité de réseau (103) par la première entité de réseau (101);
et la réduction d'une puissance d'émission de la troisième entité de réseau dans la gamme de fréquences parasites en réponse à une réception de l'information de commande par la troisième entité de réseau.

10. Procédé (300) selon l'une quelconque des revendications précédentes, dans lequel le réseau de communication (200) comprend un réseau filaire relié à la deuxième entité de réseau (103) et un réseau sans fil relié à la première entité de réseau (101).

11. Entité de réseau (101, 400) pour l'établissement d'une communication par l'intermédiaire d'un réseau de communication (200), comportant :
une interface de réseau de communication (401) pour l'émission de signaux d'émission par l'intermédiaire du réseau de communication (200) et pour la réception de signaux de réception par l'intermédiaire du réseau de communication (200) ;
dans lequel l'interface de réseau de communication (401) est conçue pour recevoir un signal parasite (102, 402) dans un gamme de fréquences parasites, et en réponse à la réception du signal parasite (102, 402), pour émettre une information de commande (404) pour réduire une puissance d'émission dans la gamme de fréquences parasites.

12. Entité de réseau (101, 400) selon la revendication 11, dans lequel l'interface de réseau de communication (401) est conçue pour émettre l'information de commande (404) par l'intermédiaire d'un canal de communication de champ proche sans fil.

13. Entité de réseau (103, 500) pour l'établissement d'une communication par l'intermédiaire d'un réseau de communication (200), comportant :
une interface de réseau de communication (501) pour l'émission de signaux d'émission par l'intermédiaire du réseau de communication (200) et pour la réception de signaux de réception par l'intermédiaire du réseau de communication (200), dans lequel l'interface de réseau de communication (501) est conçue pour recevoir une information de commande (502) qui indique une gamme de fréquences parasites, et pour réduire une puissance d'émission de l'entité de réseau (103, 500) dans la gamme de fréquences parasites en réponse à la réception de l'information de commande (502).

14. Procédé (600) pour l'établissement d'une communication par l'intermédiaire d'un réseau de communication, comportant :
la réception (601) d'un signal parasite dans un gamme de fréquences parasites par une entité de réseau ; et en réponse à la réception (601) du signal parasite, l'émission (603) d'une information de commande par l'entité de réseau pour réduire une puissance d'émission dans la gamme de fréquences parasites.

15. Procédé (700) pour l'établissement d'une communication par l'intermédiaire d'un réseau de communication, comprenant :
la réception (701) d'une information de commande par une entité de réseau, dans lequel l'information de commande indique une gamme de fréquences parasites ; et en réponse à la réception (701) de l'information de commande par l'entité de réseau, la réduction (703) d'une puissance d'émission de l'entité de réseau dans la gamme de fréquences parasites.
